# EUROPÄISCHE PATENTANMELDUNG

(11) **EP 3 192 695 A1**
(43) Veröffentlichungstag der Anmeldung: **19.07.2017**
(21) Anmeldenummer: 17150849.2
(22) Anmeldetag: 10.01.2017
(51) Int. Cl.: B60N 2/02, G05D 1/00, B60W 50/08, B60W 50/14

(54) **VERFAHREN UND VORRICHTUNG ZUM BETREIBEN EINES KRAFTFAHRZEUGES**

(30) Priorität: 18.01.2016 DE 102016200513
(71) Anmelder: Ford Global Technologies, LLC, Dearborn, MI 48126 (US)
(72) Erfinder: Arndt, Christoph, 57583 Mörlen (DE); Stefan, Frederic, 52072 Aachen (DE); Gussen, Uwe, 52393 Hürtgenwald (DE)
(74) Vertreter: Dörfler, Thomas

(57) **Zusammenfassung**

Die Erfindung betrifft ein Verfahren und eine Vorrichtung zum Betreiben eines Kraftfahrzeuges. Ein Verfahren zum Betreiben eines Kraftfahrzeuges, wobei das Fahrzeug einen ersten Fahrmodus aufweist, in welchem eine zumindest teilweise Automatisierung der Fahrzeugsteuerung vorliegt, und wobei das Fahrzeug einen zweiten Fahrmodus aufweist, in welchem diese Automatisierung zumindest teilweise aufgehoben und durch eine manuelle Fahrzeugsteuerung seitens eines Fahrers ersetzt ist, weist folgende Schritte auf: Ermitteln wenigstens eines für einen aktuellen Status des Fahrers charakteristischen Parameters, und Anpassen einer Übergangsstrategie für den Übergang zwischen dem ersten Fahrmodus und dem zweiten Fahrmodus in Abhängigkeit von diesem Parameter.

## Beschreibung

Die Erfindung betrifft ein Verfahren und eine Vorrichtung zum Betreiben eines Kraftfahrzeuges.

Das automatisierte Fahren rückt immer mehr in den Fokus der Entwicklung künftiger Fahrzeuge. Dabei ist vorgesehen, dass ein im automatisierten Fahrmodus betriebenes Fahrzeug Funktionen übernimmt bzw. Manöver durchführt, die gewöhnlich der Kontrolle des Fahrers unterliegen. Allerdings kann ein im automatisierten Fahrmodus betriebenes Fahrzeug nicht sämtliche Funktionen übernehmen bzw. sämtliche mögliche Situationen abdecken. Demzufolge muss der Fahrer unter bestimmten Bedingungen die Kontrolle über das Fahrzeug wieder übernehmen.

Hierbei tritt in der Praxis das Problem auf, dass sich der Fahrer eines sich vollständig automatisiert fortbewegenden Fahrzeuges i.d.R. nicht wirklich auf den Fahrvorgang (einschließlich des Fahrzeugzustandes, der Fahrzeugumgebung, in der Umgebung vorhandener Objekte, der Fahrzeugposition etc.) konzentriert, sondern z.B. irgendeiner anderen Tätigkeit nachgeht, während die Fahrzeugkontrolle vollständig dem automatisierten System unterliegt.

Aus DE 10 2014 218 526 A1 sind u.a. ein System und ein Verfahren bekannt, bei denen auf Basis einer Positionsänderung einer Lenkvorrichtung, eines Gaspedals oder einer Bremse der autonome Betrieb des Fahrzeuges modifiziert und gegebenenfalls beendet wird.

Aus US 2014/0303827 A1 sind u.a. Systeme und Verfahren bekannt, bei welchen auf Basis einer Bestimmung des Fahrzeugzustandes eine Strategie zur Übertragung der Fahrzeugsteuerung vom automatisierten Fahrmodus in den manuellen Fahrmodus ermittelt und entsprechende Instruktionen für den Übergang vom automatisierten Fahrmodus in den manuellen Fahrmodus erzeugt werden.

Es ist Aufgabe der vorliegenden Erfindung, ein Verfahren und eine Vorrichtung zum Betreiben eines Kraftfahrzeuges bereitzustellen, welche eine erhöhte Flexibilität des Fahrers im automatisierten Fahrmodus bei Gewährleistung eines insgesamt sicheren Betriebs ermöglichen.

Diese Aufgabe wird durch das Verfahren gemäß den Merkmalen des unabhängigen Patentanspruchs 1 bzw. die Vorrichtung gemäß den Merkmalen des nebengeordneten Patentanspruchs 11 gelöst.

Ein Verfahren zum Betreiben eines Kraftfahrzeuges, wobei das Fahrzeug einen ersten Fahrmodus aufweist, in welchem eine zumindest teilweise Automatisierung der Fahrzeugsteuerung vorliegt, und wobei das Fahrzeug einen zweiten Fahrmodus aufweist, in welchem diese Automatisierung zumindest teilweise aufgehoben und durch eine manuelle Fahrzeugsteuerung seitens eines Fahrers ersetzt ist, weist folgende Schritte auf:
- Ermitteln wenigstens eines für einen aktuellen Status des Fahrers charakteristischen Parameters; und
- Anpassen einer Übergangsstrategie für den Übergang zwischen dem ersten Fahrmodus und dem zweiten Fahrmodus in Abhängigkeit von diesem Parameter.

Der vorliegenden Erfindung liegt insbesondere das Konzept zugrunde, den Fahrer bzw. Insassen eines im automatisierten Fahrmodus befindlichen Fahrzeuges erforderlichenfalls rechtzeitig in einer geeigneten Strategie zu reaktivieren, d.h. ihm erneut die Fahrzeugkontrolle zu übertragen.

In Ausführungsformen der Erfindung erfolgt hierzu eine Beobachtung und Auswertung des Automatisierungsgrades des Fahrzeuges, der Umgebung und der Aufmerksamkeit bzw. Abgelenktheit des Fahrers, wobei jeweils eine Bewertung der Gesamtsituation (insbesondere unter Berücksichtigung des Fahrers, des Fahrzeuges, des Fahrzeugumfeldes und der Verkehrsbedingungen) erfolgen kann.

Durch die Erfindung wird insbesondere für den Fahrer die Möglichkeit geschaffen, sich während eines Betriebs seines Fahrzeuges im automatisierten Fahrmodus anderweitig zu beschäftigen (indem er sich z.B. von Fahrzeugsteuerungseinrichtungen wie dem Lenkrad oder den Pedalen abwenden bzw. einer anderen Position innerhalb des Fahrzeuges zuwenden kann).

Gemäß einer Ausführungsform umfasst das Ermitteln des wenigstens einen Parameters das Ermitteln einer aktuellen Sitzposition des Fahrers im Fahrzeug und/oder das Ermitteln einer aktuellen Tätigkeit des Fahrers.

Gemäß einer Ausführungsform erfolgt das Anpassen der Übergangsstrategie für den Übergang zwischen dem ersten Fahrmodus und dem zweiten Fahrmodus ferner in Abhängigkeit von aktuellen und/oder künftig zu erwartenden Umgebungsbedingungen des Fahrzeuges.

Gemäß einer Ausführungsform umfassen diese Umgebungsbedingungen Verkehrsbedingungen, Wetterbedingungen und/oder Fahrbahnbedingungen.

Gemäß einer Ausführungsform wird auf Basis der Umgebungsbedingungen ein weiterer, für die Komplexität der Umgebung des Fahrzeuges charakteristischer Parameter ermittelt.

Gemäß einer Ausführungsform erfolgt das Anpassen der Übergangsstrategie für den Übergang zwischen dem ersten Fahrmodus und dem zweiten Fahrmodus ferner in Abhängigkeit von diesem weiteren Parameter.

Gemäß der Erfindung kann insbesondere vom aktuellen Zustand aus eine Vorhersage eines künftigen (z.B. hinsichtlich der Verkehrsbedingungen komplexen) Zustandes getroffen werden, wobei auch der zeitliche Abstand zur nächsten komplexen Situation bestimmt werden kann. Dieser zeitliche Abstand kann mit der notwendigen Reaktivierungszeit des Fahrers verglichen werden. Solange die betreffende komplexe Situation noch zeitlich oder räumlich weit entfernt ist, kann gegebenenfalls eine Reaktivierung des Fahrers unterbleiben.

Gemäß einer Ausführungsform erfolgt somit eine Vorhersage künftiger Situationen sowie Zeitintervalle, um einen sicheren Fahrbetrieb zu gewährleisten. Dabei können insbesondere Situationen, welche für ein automatisiertes Fahren schwierig oder problematisch sind, vorhergesagt werden. Des Weiteren können erforderliche Zeitintervalle für eine erneute Übertragung der Steuerung auf den Fahrer vorhergesagt werden.

Gemäß einer Ausführungsform umfasst das Anpassen der Übergangsstrategie bzw. die erneute Übertragung der Steuerung auf den Fahrer die Übermittlung eines Warnsignals an den Fahrer, was z.B. akustisch oder haptisch (beispielsweise über eine Vibration des Sitzes) erfolgen kann. Des Weiteren kann eine automatische Überführung des Fahrersitzes in die Fahrposition erfolgen. Ferner können etwaige Unterhaltungseinrichtungen deaktiviert werden.

Gemäß einer Ausführungsform erfolgt das Anpassen der Übergangsstrategie ferner in Abhängigkeit von einer für den Übergang von dem ersten Fahrmodus in den zweiten Fahrmodus erforderlichen Zeitspanne. In Ausführungsformen wird eine Zeitspanne für die vollständige Übertragung der Steuerung bzw. den Übergang vom automatisierten Fahrmodus zum manuellen Betrieb des Fahrzeuges auf Basis des Automatisierungsgrades und der Zeitspanne bis zur Deaktivierung des automatisierten Fahrmodus ermittelt.

Gemäß einer Ausführungsform umfasst das Anpassen der Übergangsstrategie die Festlegung eines Zeitpunktes für den Beginn von Reaktivierungsmaßnahmen zur Einbeziehung des Fahrers in die Fahrzeugsteuerung.

Gemäß einer Ausführungsform werden diese Reaktivierungsmaßnahmen derart durchgeführt, dass in Abhängigkeit von einer Überwachung des Status des Fahrers die Fahrzeugsteuerung schrittweise auf den Fahrer übertragen wird.

Die Erfindung betrifft weiter eine Vorrichtung zum Betreiben eines Kraftfahrzeuges, wobei das Fahrzeug einen automatisierten Fahrmodus aufweist, in welchem sich das Fahrzeug automatisiert fortbewegt, wobei die Vorrichtung dazu konfiguriert ist, ein Verfahren mit den vorstehend beschriebenen Merkmalen durchzuführen.

Die Festlegung bzw. Vorhersage des Zeitpunkts für ein Eingreifen des Fahrers in die Fahrzeugsteuerung kann auf Basis eines oder mehrerer der folgenden Parameter erfolgen:
- Umgebungskomplexität (Anzahl der Verkehrszeichen, Anzahl der Fahrspuren, Anzahl von Auffahrten oder Abfahrten, Anzahl parkender Fahrzeuge etc.);
- Umgebungsbedingungen (Wetter, Fahrbahn, Straßenarbeiten etc.);
- Verkehrsbedingungen (z.B. im Hinblick auf das Vorhandensein einer Vielzahl beweglicher Objekte):
- Abgelenktheitsgrad des Fahrers;
- Bekannte zeitliche oder räumliche Begrenzungen des automatisierten Fahrzeugbetriebs, z.B. das Fahren auf einer Autobahn nur für eine bestimmte Distanz oder die Deaktivierung des automatisierten Fahrmodus beim Verlassen der Autobahn z.B. auf Basis von Navigationsinformation. Beispielsweise kann eine Kette von Maßnahmen zur Reaktivierung des Fahrers entsprechend frühzeitig ausgelöst werden, wenn der automatisierte Fahrmodus nur bei Fahrt auf einer Autobahn aktiv sein soll und angesichts einer vorgegebenen Fahrtroute die relevante bzw. vorgesehene Autobahnabfahrt bekannt ist;

In Ausführungsformen der Erfindung werden Assistenzfunktionen des automatisierten Fahrmodus schrittweise aktiviert. Mit anderen Worten müssen nicht sämtliche Assistenzfunktionen unmittelbar ausgeschaltet werden, wobei etwa ein Spurhalteassistenzsystem oder ein Tempomat aktiviert bleiben können, während die vollautomatisierte Lenkradsteuerung abgeschaltet wird.

In Ausführungsformen der Erfindung kann der Fahrer entscheiden, bis zu welchem Grade einzelne Unterstützungs- bzw. Assistenzfunktionen deaktiviert werden sollen, wenn er die Steuerung vollständig übernimmt (indem er z.B. seine Hände am Lenkrad, die Füße auf den Pedalen und den Blick auf die Straße gerichtet hat). Hierbei kann der Fahrer die Deaktivierung auch abbrechen, um einen gewissen Unterstützungsgrad seitens des Fahrzeuges aufrechtzuerhalten.

Weitere Ausgestaltungen der Erfindung sind der Beschreibung sowie den Unteransprüchen zu entnehmen. Die Erfindung wird nachstehend anhand einer beispielhaften Ausführungsform unter Bezugnahme auf die beigefügte Abbildung erläutert.

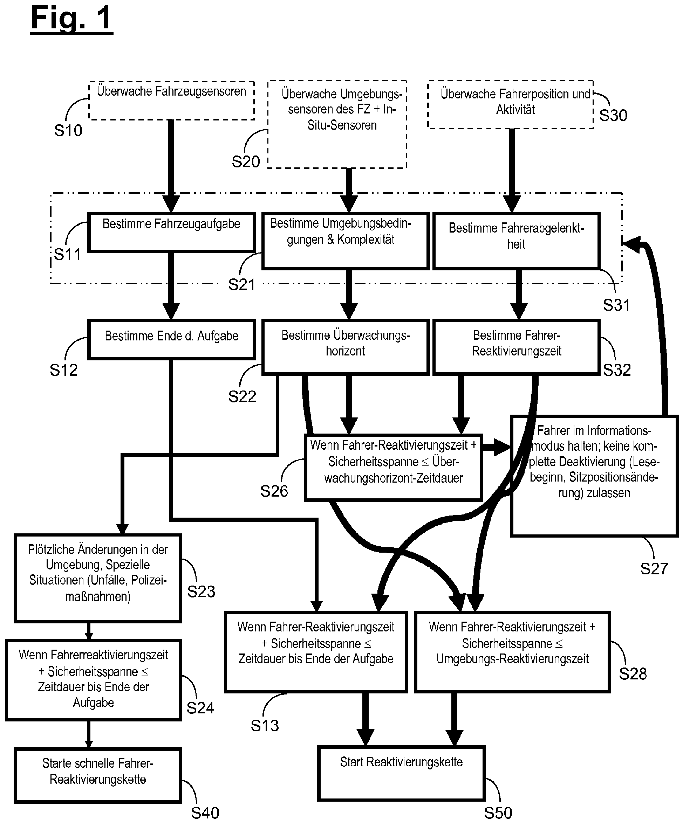

Die einzige Figur 1 zeigt ein Diagramm zur Erläuterung eines möglichen Ablaufs des erfindungsgemäßen Verfahrens in einer beispielhaften Ausführungsform.

Gemäß der Erfindung wird die Steuerung eines sich im automatisierten Fahrmodus befindlichen Fahrzeuges unter bestimmten Bedingungen erneut auf den Fahrer übertragen. Hierbei können insbesondere der Automatisierungsgrad des Fahrzeuges, die Fahrzeugumgebung und die Aufmerksamkeit des Fahrers überwacht und ausgewertet werden. Die Übertragung der Steuerung des Fahrzeuges an den Fahrer (im Weiteren auch als "Reaktivierung" des Fahrers bezeichnet) wird erfindungsgemäß in unterschiedliche Aspekte unterteilt.

Gemäß einem Aspekt (Schritte S10-S12 in Fig. 1) kann eine durchzuführende Aufgabe räumlich und/oder zeitlich eingegrenzt werden, indem zu einem bestimmten Zeitpunkt oder beim Erreichen einer bestimmten Position der Fahrer zur Übernahme der Kontrolle über das Fahrzeug bzw. zur erneuten manuellen Steuerung des Fahrzeuges aufgefordert werden kann. Bei diesen Aufgaben kann es sich z.B. um das Fahren auf einer Autobahn, das Durchführen eines Parkvorganges, das Verlassen einer Parkzone, das Fahren in einer Fahrzeugkolonne etc. handeln.

Gemäß einem weiteren Aspekt (Schritte S20-S22 in Fig. 1) können die Komplexität der Umgebung, die Umgebungsbedingungen sowie die Verkehrsbedingungen berücksichtigt werden. So kann etwa das Fahren in einer vergleichsweise komplexen Umgebung eine besondere Herausforderung für einen automatisierten Fahrmodus darstellen, so dass der Fahrer zumindest eine Art Aufsicht führen muss, um jederzeit die Steuerung des Fahrzeuges wieder übernehmen zu können. Des Weiteren können Änderungen der Umgebung auch die Leistungsfähigkeit des automatisierten Fahrens beeinflussen und den Zuverlässigkeitsgrad des automatisierten Fahrens verringern. Beispielsweise kann der Fahrer über eine eingeschränkte Funktionalität des automatisierten Fahrmodus informiert werden, wenn z.B. in einer Verkehrssituation mit vergleichsweise dichtem Verkehr das Fahrzeug langsamer fährt. Der Fahrer kann so insbesondere in die Lage versetzt werden, zu entscheiden, ob er die Kontrolle über das Fahrzeug übernimmt, um (z.B. aufgrund einer besseren Situationserkennung) schneller fahren zu können oder die aktuelle Straße zu verlassen und eine andere Route zu wählen. Des Weiteren werden typischerweise spezielle Verkehrsbedingungen (z.B. Staus, Unfälle, Annäherung von Rettungsfahrzeugen etc.) beim automatisierten Fahren nicht vollständig erfasst. Der Fahrer kann auch hierüber entsprechend informiert und erforderlichenfalls mit der Steuerung des Fahrzeuges betraut werden.

Gemäß einem Aspekt der Erfindung (Schritte S30-S32 in Fig. 1) wird insbesondere der Aufmerksamkeitsgrad bzw. das Ausmaß der Abgelenktheit des Fahrers überwacht. Die Überwachung des Fahrzeuges kann z.B. die Position bzw. den Zustand des Fahrers zeigen (z.B. ob sich dieser in normaler Fahrposition auf dem Vordersitz befindet, vom Vordersitz aus den anderen Fahrzeuginsassen zugewandt ist oder auf dem Vordersitz schläft). Des Weiteren können die vom Fahrer durchgeführten Tätigkeiten überwacht werden (z.B. ob der Fahrer gerade die Landschaft betrachtet, seinen Tablet-Computer bedient oder eine Unterhaltung mit anderen Fahrzeuginsassen führt). All diese Beobachtungen können bei der zeitlichen Planung einer erneuten Einbeziehung des Fahrers in die Steuerung des Fahrzeuges bzw. des Überganges in den manuellen Fahrmodus berücksichtigt werden.

Sämtliche der vorstehend genannten Bedingungen bzw. Beobachtungen werden unter Verwendung der im Fahrzeug verfügbaren Sensoren ermittelt bzw. durchgeführt, und die gewonnenen Erkenntnisse über Umgebung, Fahrzeug und Fahrer werden zu einem "Beobachtungshorizont" kombiniert, in welchem die Komplexität der Situation, die zeitliche und/oder räumliche Begrenzung der durchzuführenden Aufgabe, der Zeitpunkt der erneuten Einbeziehung des Fahrers in die Fahrzeugsteuerung etc. vorhergesagt werden.

Auf Basis der Parameter des Beobachtungshorizonts kann zum einen eine Kette von Maßnahmen zur erneuten Übernahme der Fahrzeugsteuerung durch den Fahrer aktiviert bzw. ausgelöst werden. Zum anderen kann umgekehrt gegebenenfalls eine vollständige "Abkopplung des Fahrers" von der Aufgabe der Fahrzeugsteuerung etwa aufgrund einer hohen Verkehrsdichte oder einer hohen Komplexität der Umgebung verhindert werden.

Erfindungsgemäß kann somit insbesondere eine Vorhersage der erforderlichen Schritte des Fahrers basierend auf den Parametern des Beobachtungshorizonts getroffen werden. Wenn die Maßnahmen des Fahrers nicht innerhalb des Beobachtungshorizonts sondern z.B. erst nach dem Ende der geplanten Navigationsroute erforderlich werden, kann dies als "grüne" bzw. freigegebene Situation (die keine Einbeziehung des Fahrers in die Fahrzeugsteuerung erfordert) angesehen werden. Wenn Schritte des Fahrers jedoch innerhalb des Beobachtungshorizonts erforderlich werden, berechnet die Vorrichtung den Zeitpunkt, zu welchem der Fahrer wieder in der Lage soll, die Steuerung über das Fahrzeug zu übernehmen. Auf Basis dieser Berechnung (sowie gegebenenfalls einer Sicherheitszeitspanne) wird eine Kette an Maßnahmen zur erneuten Einbeziehung des Fahrers in die Fahrzeugsteuerung aktiviert (Schritte S13, S28 und S50 in Fig. 1).

Wenn eine sofortige bzw. kurzfristige Aktion des Fahrers geboten ist, kann die übliche Kette von Maßnahmen zur erneuten Einbeziehung des Fahrers in die Fahrzeugsteuerung entsprechend abgekürzt werden (Schritte S23, S24 und S40 in Fig. 1). Dabei kann der Fahrer (z.B. über unterschiedliche optische, akustische und/oder haptische Signale) gewarnt werden.

In der entsprechenden Kette von Maßnahmen zur erneuten Einbeziehung des Fahrers in die Fahrzeugsteuerung wird der Fahrer in einem ersten Schritt darüber informiert, dass er die Fahrzeugsteuerung übernehmen soll. Dies kann über eine akustische, optische und/oder haptische Informationsübermittlung an den Fahrer erfolgen. Dabei kann die Zeit bis zur Übernahme der Steuerung in Form eines Countdowns angezeigt werden.

Im nächsten Schritt kann der Fahrer bzw. der Fahrersitz zurück in die Fahrposition überführt werden. In einem weiteren Schritt wird abgewartet und überwacht, wann der Fahrer seine Hände wieder an das Lenkrad legt und dazu bereit ist, die Fußpedale zu betätigen. Wenn sich die Hände des Fahrers wieder für eine bestimmte Zeitspanne Ts am Lenkrad befinden, kann die Lenksteuerung zurück an den Fahrer übertragen werden. Des Weiteren kann bei Beginn eines Lenkvorganges durch den Fahrer die Steuerung wieder an den Fahrer übergeben werden.

Wenn sich die Füße des Fahrers wieder für eine bestimmte Zeitspanne Tf in einer für eine Pedalbetätigung geeigneten Position befinden, kann die Längssteuerung des Fahrzeuges bzw. die Kontrolle über die longitudinale Bewegung des Fahrzeuges wieder an den Fahrer übertragen werden. Des Weiteren kann die Steuerung an den Fahrer übertragen werden, sobald der Fahrer beginnt, eines der Pedale zu betätigen. Anschließend wird der automatisierte Fahrmodus heruntergefahren.

## Patentansprüche

1. Verfahren zum Betreiben eines Kraftfahrzeuges, wobei das Fahrzeug einen ersten Fahrmodus aufweist, in welchem eine zumindest teilweise Automatisierung der Fahrzeugsteuerung vorliegt, und wobei das Fahrzeug einen zweiten Fahrmodus aufweist, in welchem diese Automatisierung zumindest teilweise aufgehoben und durch eine manuelle Fahrzeugsteuerung seitens eines Fahrers ersetzt ist,
**dadurch gekennzeichnet, dass**
das Verfahren folgende Schritte aufweist:
a) Ermitteln wenigstens eines für einen aktuellen Status des Fahrers charakteristischen Parameters; und
b) Anpassen einer Übergangsstrategie für den Übergang zwischen dem ersten Fahrmodus und dem zweiten Fahrmodus in Abhängigkeit von diesem Parameter.

2. Verfahren nach Anspruch 1,
**dadurch gekennzeichnet, dass**
das Ermitteln des wenigstens einen Parameters im Schritt a) das Ermitteln einer aktuellen Sitzposition des Fahrers im Fahrzeug und/oder das Ermitteln einer aktuellen Tätigkeit des Fahrers umfasst.

3. Verfahren nach Anspruch 1 oder 2,
**dadurch gekennzeichnet, dass**
das Anpassen der Übergangsstrategie für den Übergang zwischen dem ersten Fahrmodus und dem zweiten Fahrmodus ferner in Abhängigkeit von aktuellen und/oder künftig zu erwartenden Umgebungsbedingungen des Fahrzeuges erfolgt.

4. Verfahren nach Anspruch 3,
**dadurch gekennzeichnet, dass**
diese Umgebungsbedingungen Verkehrsbedingungen, Wetterbedingungen und/oder Fahrbahnbedingungen umfassen.

5. Verfahren nach Anspruch 3 oder 4,
**dadurch gekennzeichnet, dass**
auf Basis der Umgebungsbedingungen ein weiterer, für die Komplexität der Umgebung des Fahrzeuges charakteristischer Parameter ermittelt wird.

6. Verfahren nach Anspruch 5,
**dadurch gekennzeichnet, dass**
das Anpassen der Übergangsstrategie für den Übergang zwischen dem ersten Fahrmodus und dem zweiten Fahrmodus ferner in Abhängigkeit von diesem weiteren Parameter erfolgt.

7. Verfahren nach einem der vorhergehenden Ansprüche,
**dadurch gekennzeichnet, dass**
das Anpassen der Übergangsstrategie die Übermittlung eines Warnsignals an den Fahrer umfasst.

8. Verfahren nach einem der vorhergehenden Ansprüche,
**dadurch gekennzeichnet, dass**
das Anpassen der Übergangsstrategie ferner in Abhängigkeit von einer für den Übergang von dem ersten Fahrmodus in den zweiten Fahrmodus erforderlichen Zeitspanne erfolgt.

9. Verfahren nach einem der vorhergehenden Ansprüche,
**dadurch gekennzeichnet, dass**
das Anpassen der Übergangsstrategie die Festlegung eines Zeitpunktes für den Beginn von Reaktivierungsmaßnahmen zur Einbeziehung des Fahrers in die Fahrzeugsteuerung umfasst.

10. Verfahren nach Anspruch 9,
**dadurch gekennzeichnet, dass**
diese Reaktivierungsmaßnahmen derart durchgeführt werden, dass in Abhängigkeit von einer Überwachung des Status des Fahrers die Fahrzeugsteuerung schrittweise auf den Fahrer übertragen wird.

11. Vorrichtung zum Betreiben eines Kraftfahrzeuges, wobei das Fahrzeug einen automatisierten Fahrmodus aufweist, in welchem sich das Fahrzeug automatisiert fortbewegt,
**dadurch gekennzeichnet, dass**
die Vorrichtung dazu konfiguriert ist, ein Verfahren nach einem der vorhergehenden Ansprüche durchzuführen.
